# EUROPEAN PATENT APPLICATION

(11) **EP 3 742 367 A1**
(43) Date of publication of application: **25.11.2020**
(21) Application number: 20175638.4
(22) Date of filing: 20.05.2020
(51) Int. Cl.: G06Q 10/08, G06Q 50/02

(54) **METHOD FOR DETERMINING INFORMATION INTEGRITY AND COMPUTER SYSTEM USING THE SAME**

(30) Priority: 21.05.2019 US 201962850961 P
(71) Applicant: Obook Inc., New Taipei City 231 (TW)
(72) Inventor: Wang, Chun Kai, 116 Taipei City (TW); Hsieh, Chung Han, 115 Taipei City (TW); Teng, Hsiu An, 104 Taipei City (TW); Liu, Chih Yang, 110 Taipei City (TW)
(74) Representative: Straus, Alexander

(57) **Abstract**

An embodiment of the present invention provides a method (30) for determining integrity of information of an object, comprises generating a first data corresponding to the information of the object and generating a first representative data corresponding to the first data (302); storing the first data to a database (22), and adding the first representative data into a first block of a blockchain (24) (304); reading a second data from the database (22) in response to a command for retrieving the first data from the database (22) (306); using the first block to indicate whether the second data is identical to the first data.

## Description

### Field of the Invention

The present invention relates to a method and computer system of data storing, and more particularly, to a method for determining information integrity and computer system using the same.

### Background of the Invention

Traceability systems have been widely used in various industries, which allow the consumers to trace the detailed information of products in a supply chain, a marketing system, a logistics system, etc. However, most of the traceability systems hardly can detect and ensure the integrity of information. Besides, most of the existing blockchain traceability systems are incapable of storing massive visualized information of products such that the information of products may be incomplete.

Therefore, it is necessary to improve the prior art.

### Summary of the Invention

It is therefore a primary objective of the present application to provide a method and computer system for determining integrity of information of an object, to improve over disadvantages of the prior art.

This is achieved by a computer system according to the independent claim 10 or by a method according to the independent claim 1 here below. The dependent claims pertain to corresponding further developments and improvements.

As will be seen more clearly from the detailed description following below, a claimed method for determining integrity of information of an object comprises generating a first data corresponding to the information of the object and generating a first representative data corresponding to the first data; storing the first data to a database, and adding the first representative data into a first block of a blockchain; reading a second data from the database in response to a command for retrieving the first data from the database; using the first block to indicate whether the second data is identical to the first data.

In another aspect, a claimed computer system comprises a processing unit; and a storage unit, storing information of an object and a program code, wherein the program code instructs the processing unit to execute the following steps: generating a first data corresponding to the information of the object and generating a first representative data corresponding to the first data; storing the first data to a database, and adding the first representative data into a first block of a blockchain; reading a second data from the database in response to a command for retrieving the first data from the database; using the first block to indicate whether the second data is identical to the first data.

### Brief Description of the Drawings

FIG. 1 is a schematic diagram of a blockchain in the prior art.
FIG. 2 is a schematic diagram of a system according to an embodiment of the present invention.
FIG. 3 is a schematic diagram of an integrity detecting process according to an embodiment of the present invention.
FIG. 4 is a schematic diagram of a computer system according to an embodiment of the present invention.

### Detailed Description

Certain terms are used throughout the description and following claims to refer to particular components. As one skilled in the art will appreciate, manufacturers may refer to a component by different names. This document does not intend to distinguish between components that differ in name but not function. In the following description and in the claims, the terms "include" and "comprise" are used in an open-ended fashion, and thus should be interpreted to mean "include, but not limited to ...".

In order to enhance reliability, "blockchain" is widely utilized in different applications in the prior art. A blockchain is typically managed by a peer-to-peer network collectively adhering to a protocol for inter-node communication and validating new blocks. Once recorded, the data in any given block cannot be altered retroactively without the alteration of all subsequent blocks, which requires consensus of the network majority.

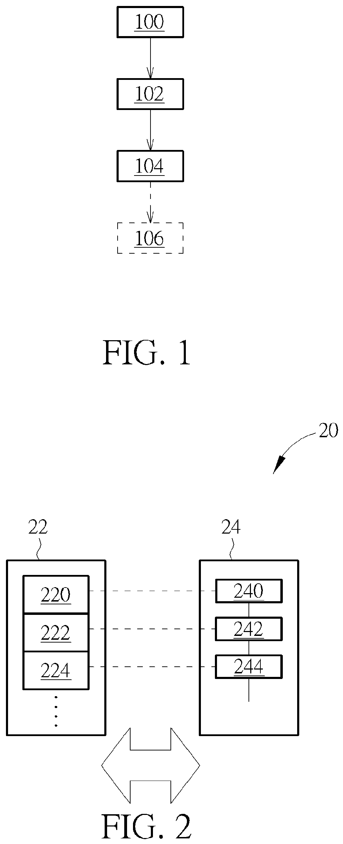

FIG. 1 is a schematic diagram of a blockchain 10 in the prior art. The blockchain 10 includes blocks 100, 102, which are recorded, and an unconfirmed block 104. The blocks 100 and 102 cannot be modified after they are confirmed, and the block 104 will be confirmed until validated by the network majority among nodes. Once the block 104 is confirmed, a block 106 may be inserted following the block 104. Therefore, integrity of the blockchain 10 can be guaranteed because data in any given block cannot be altered.

However, the block size of the blockchain 10 is limited by the blockchain protocol, for example, 32MB to bitcoin cash (BCH.) If the blockchain technology is applied to a traceability system to record information, the storing ability provided by the traceability system may be limited and would not be allowed to record multimedia data, such as photos, audios, and videos. On the other hand, if a multimedia data is split to be stored in a plurality of blocks of a blockchain, the efficiency of accessing the multimedia data may be lowered.

To record large-size data as well as keep reliability and integrity of the recorded data, the present invention uses both a database and a blockchain. Note that, data to be recorded in the present invention may be information of an object, wherein the object may be a tangible article or goods, such as a used car in a used-car marketing system, an agricultural product in a traceability system, a cargo in an import/export cargo declaration system, and so on. Alternatively, the object may be an intangible or virtual estate, such as an ownership right of a property or a real estate.

Due to the difference of the objects, the information of the object may represent different statuses of the object. For example, if the object is the used car, the information thereof may be varied when the used car is examined, sold, etc. If the object is the agricultural product, the information thereof may be varied when the agricultural product undergoes different processes such as fertilization, pesticide, packaging, and transportation in the agricultural product traceability system. If the object is the cargo in the import/export cargo declaration system, the information thereof may be varied when the cargo in different stages in the import/export cargo declaration system. If the object is the ownership right, the information thereof may be varied when the ownership right is transferred, inherited, or repealed. To record the information of the object, especially when the information is varied, large-size multimedia data may be required. For example, for the used car, the information of the object may be recorded in terms of photos of the used car, audios of the car engine sound, etc. For the agricultural products, the information of the object may be recorded in terms of videos of the fertilization process, or documents from the government.

To prevent data in the database from being tampered, the present invention further coordinates the database and the blockchain to record data corresponding to the information of the object and keep reliability of the information.

In detail, FIG. 2 is a schematic diagram of a system 20 according to an embodiment of the present invention. As shown in FIG. 2, the system 20 comprises a database 22 and a blockchain 24. The database 22 comprises data fields 220, 222 and 224 for storing data, such as photos, audios, videos or other kinds of data. The blockchain 24 comprises blocks 240, 242 and 244, where once confirmed, the confirmed blocks cannot be modified. In the system 20, the data fields 220, 222 and 224 of the database 22 are corresponding to the blocks 240, 242 and 244 of the blockchain 24, and the present invention utilizes the blockchain 24 to keep integrity of the database 22. More specifically, the data fields 220, 222 and 224 of the database 22 are utilized for storing data corresponding to the information of the object, especially when the information of the object is varied, while the blocks 240, 242 and 244 of the blockchain 24 are utilized for recording representative data corresponding to the data stored in the data fields 220, 222 and 224. In other words, the embodiment of the present invention generates a representative data corresponding to the data being stored to the database 22, and adds the representative data into a block of the blockchain 24. In such a situation, the reliability of the database 22 may be enhanced because the representative data in the blocks 240, 242 and 244, corresponding to data stored in the data fields 220, 222 and 224, may not be altered; or in some cases, the representative data in the blocks 240, 242 and 244 may be used to indicate whether data in the database 22 is tampered.

For example, if the system 20 is applied to a used-car marketing system and a used car therein is examined, meaning that the information of the object in the system 20 is varied, the database 22 may store one or more photos corresponding to the examining result (which may be inputted by an operator), and the blockchain 24 may record representative data corresponding to the photos stored in the database 22. Therefore, the system 20 may record historical or transaction data of the used car via the database 22 and detect whether the recorded data is modified via the blockchain 24, so as to enhance the credibility of the marketing system. In another example, if the system 20 is applied to an import/export cargo declaration system, the system 20 may store the changed statuses of a cargo therein, such as passing a certification or being tax-duty paid. In yet another example, the system may corporate with the IoT (Internet of Things)-based equipment to perform the product monitoring, for example, the system 20, applied to an agricultural product traceability system, may store information of each process; for example, when agricultural products are under fertilization, the system 20 may trigger the loT-based equipment such as a camera to catch videos or photos automatically, store the videos or photos to the database 22, and generate corresponding representative data to the blockchain 24.

As can be seen, the system 20 may store large-size data in the database 22 and store representative data corresponding to the data of the database 22 in the blockchain 24, such that the system 20 has enough space to store multimedia data while keeping reliability of the stored data based on the blockchain technology.

On the other hand, when the system 20 is applied to a DNA report certification system, an unauthorized user may not access the database 22 because the DNA reports are highly private and should be kept strictly confidential. However, the user may verify the integrity of the DNA report by comparing the representative data instead of touching the original data. For example, if a DNA report is stored in the data field 220 and the representative data is correspondingly stored in the block 240, then the user may only retrieve the representative data in the block 240 with the data stored in the database 22 can be kept private.

Note that, the representative data may be utilized for detecting whether the database 22 is tampered. In an embodiment, the representative data is generated when a data is generated/inputted to the database 22. For example, the representative data in the blocks 240, 242 and 244 of the blockchain 24 may be generated by duplicating data in the data fields 220, 222 and 224 of the database 22 (i.e., the blockchain 24 is taken as a backup of the database 22), or by performing a compression to data in the data fields 220, 222 and 224 (i.e., the blockchain 24 records compression results of the database 22).

In another example, the representative data in the blocks 240, 242 and 244 of the blockchain 24 may be generated by calculating digests of data in the data fields 220, 222 and 224 through a mapping table or a public algorithm, so as to obtain hash values or the checksums corresponding to data in the data fields 220, 222 and 224.

In addition, generating each of the representative data of the blocks 240, 242 and 244 may not be limited to calculation from a single data field in the database 22. For example, the representative data in the block 240 may include a Secure Hash Algorithm 256 (SHA-256) digest of the data in the data field 220; the representative data in the block 242 may include a SHA-256 digest of both the representative data in the inserted block 240 and data in the data field 222; and the representative data in the block 244 may include a SHA-256 digest of the representative data in the inserted blocks 240, 242 and data in the data field 224. In other words, the representative data may be calculated according to all the stored data in the database 22 and all the stored representative data in the blockchain 24.

On the other hand, in an embodiment, the representative data may be calculated according to one of the stored data and one of the stored digests. For example, the representative data in the block 240 may include the SHA-256 digest of the field 220; the representative data in the block 242 may include the SHA-256 digest of the representative data in the inserted block 240 and data in the data field 222; the representative data in the block 244 may include the SHA-256 digest of the representative data in the inserted block 242 and data in the data field 224.

As can be seen, the representative data may be calculated according to at least a stored representative data in at least a confirmed block in the blockchain and/or at least a stored data in the database. Those skilled in the art may make modifications of the decision rule and alterations accordingly, and not limited herein.

Due to the collision resistance of the blockchain 24, an attacker to the system 20 is hard to generate a fake data with the same digest, and due to the avalanche effect thereof, the hash value of the data field may be dramatically changed even when the attacker modifies a bit to the original data; that is, the attacker may not modify the data in the system 20 easily, and the data integrity can be guaranteed. On the other hand, the integrity of the system 20 may be verified easily by comparing the representative data between the last data field in the database 22 and the last block in the blockchain 24. By doing so, any attack may be detected even if an attacker adds a fake data to the database and adds a fake representative data corresponding to the fake data because the relation is not only between one data field and one block, but also among the combination of multiple data fields and blocks.

In short, the present invention stores data in the database, generates representative data corresponding to the stored data, and adds the representative data to the blocks of the blockchain. Therefore, once the blocks are confirmed, any user may read the data from the database and also retrieve the block containing the representative data corresponding to the data, so as to determine the data integrity.

For example, if the representative data in the blocks 240, 242 and 244 of the blockchain 24 are duplicated from the data fields 220, 222 and 224 respectively in the database 22, the user may detect the integrity of the data fields 220, 222 and 224 in the database 22 by retrieving the duplicated data from the confirmed blocks 240, 242 and 244, which cannot be altered. More specifically, since the representative data in the blockchain 24 is calculated from data in the database 22, the integrity of the data in the database 22 may be detected by comparing the representative data in the blockchain 24 with the data in the database 22. In other words, when a user reads data from the database 22, the user may also retrieve a block containing representative data corresponding to the data to be read. Accordingly, the user may determine whether the data being read is identical to the data stored before according to the relation between the representative data and the data.

Moreover, if the representative data in the block 240 of the blockchain 24 is the hash value of SHA-256 to the data field 220 of the database 22, due to the collision resistance and the avalanche effect, the attacker is difficult to tamper the data field 220 in the database 22. Therefore, the data integrity of the data in the database 22 can be ensured.

In an embodiment, if the representative data is calculated according to the data field and at least a stored data field in the database 22, the database 22 may be verified and be determined which data field is tampered by a binary search. More specifically, due to the avalanche effect, the representative data in the blockchain 24 will be changed after the tampered data field; therefore, the integrity of the middle data field ensures the integrity of a half of the database 22, and again the integrity of the middle element in the half database, which need to be verified, ensures a quarter of the database 22; by doing so, the data field in which the attacker tampers can be found easily.

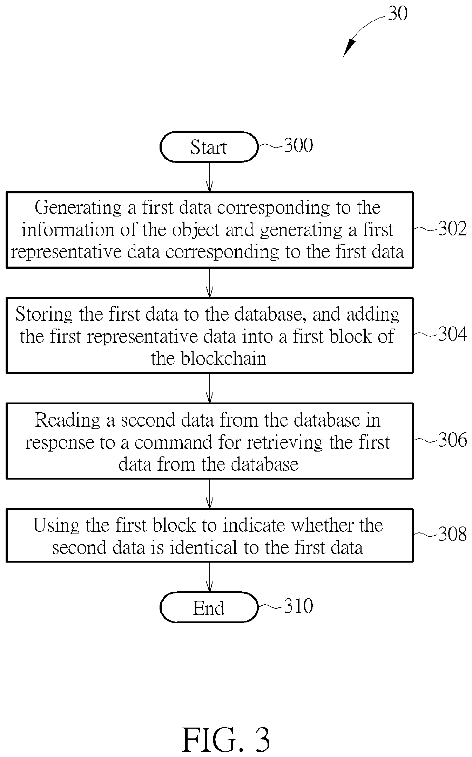

The above operations can be summarized in an integrity detecting process 30, as shown in FIG. 3. The integrity detecting process 30 is utilized in the system 20, and comprises the following steps:
Step 300: Start.
Step 302: Generating a first data corresponding to the information of the object and generating a first representative data corresponding to the first data.
Step 304: Storing the first data to the database 22, and adding the first representative data into a first block of the blockchain 24.
Step 306: Reading a second data from the database 22 in response to a command for retrieving the first data from the database 22.
Step 308: Using the first block to indicate whether the second data is identical to the first data.
Step 310: End.

With the integrity detecting process 30, the information of the object is recorded as data in the data fields 220-224 of the database 22, and the system 20 accordingly generates representative data to form the blocks 240-244 of the blockchain 24. When a user tries to read a specified data from the database 22, the user may send a command for retrieving the specified data. Since the blockchain 24 records representative data corresponding to data stored in the database 22, which cannot be altered, the user may detect the relation between retrieved data and the corresponding representative data, to determine whether the retrieved data is identical to the specified data intended to be read, so as to enhance data credibility and prevent from receiving tampered information. Furthermore, if the representative data corresponding to the data field is lossless, e.g. by duplicating data of the database 22, or by performing a compression to data of the database 22, the system 20 may perfectly reconstruct the original data according to the lossless representative data or recover the database 22 when the integrity thereof is damaged.

For example, if the representative data in the blocks 240-244 of the blockchain 24 are generated by duplicating data in the data fields 220-224 of the database 22, the database 22 may be recovered from the blockchain 24 by copying the representative data from the blockchain 24 to the database 22. By the same token, if the representative data in the blocks 240-244 of the blockchain 24 are generated by performing compression to data in the data fields 220-224 of the database 22, the database 22 may be recovered from the blockchain 24 by decompression for the blocks 240, 242 and 244 when the integrity of the database is damaged.

Notably, the system 20 is an embodiment of the present invention, and those skilled in the art may make modifications and alterations. For example, the database 22 may include any amount of data fields, which is not limited to three, and similarly, the amount of the blocks in the blockchain 24 may be any number, and not limited to three. In addition, the data fields may be stored in multiple computers, located in the same physical location, or may be dispersed over a network of interconnected computers. In an embodiment, the data fields may be generated by manual input of an operator or automatically generated by a machine, or may be triggered by a smart contract in a blockchain.

In addition, the blockchain 24 may contain a plurality of side chains, which may expand the original main chain, add new functions such as transaction privacy protection technology, smart contracts, and place some high-frequency transactions or customized transactions outside the main chain. Moreover, Plasma protocol may be applied to allow storing the result on the main chain with the calculation on the side chains (plasma chain).

Furthermore, in order to improve the privacy protection of both parties to the transaction, the ring signature confidential transaction, usually referred to as RingCT, may apply to hide transactions. Those skilled in the art may make modifications and alterations and are not limited thereto. For example, to avoid the invalidation storing to the orphan blocks, the confirmation number may be set to 20.

Notably, the number of the representative data in a block corresponding to a data field may not limited to one. For example, the block 240 may contain the digest of the data field 220 and the compression result of the data field 220 or other information, such as the serial number, the storing time and the submitter which are corresponding to the data field 220. Therefore, the database may be integrity-guaranteed by the digest stored in the block 240, and the database may be recovered by the compression result stored in the block 240 when the integrity of the database is damaged.

In addition, methods for calculating the digest are well known in the art. In an embodiment, the digest may be calculated according to the recorder's identity. For example, if the system 20 is applied to a traceability system, each undertaker in each step of the import declaration process should record corresponding statuses into the system 20. To verify the undertaker's identity, the representative data may be calculated by a mapping table, a public algorithm or a public protected algorithm with a private key, such as the message authentication code function HMAC-SHA256, which is a public protected algorithm with a private key, according to the data field 224. Therefore, the representative data of the same data would vary for the inputs of the different undertakers. The method of identity verification such as a hash function, a message authentication code function, a key derivation function, a keyed-hash message authentication code function or a symmetric-key cryptographic block cipher in authenticated encryption mode, is known to those skilled in the art, which is not narrated herein for brevity.

In an embodiment, if the system 20 is applied to a marketing system, the representative data may further comprise a pointer ID of products in the marketing system. For example, the statistics, such as the dimension, weight, height, and price of the products may be stored in the database 22, and the blocks 240 and 242 may be corresponding to the products with pointer IDs 0000 and 0002 respectively. However, if the seller wants to modify the statistics of the product with the pointer ID 0000, then the seller may insert new data, which is with the pointer ID 0000 because the confirmed block 240 is unalterable. For example, in a used-car marketing system, when a blue used car with the pointer ID 0000 is wrongly recorded as a red one in the data field 220 and the representative data is correspondingly stored in the block 240 because of manual input errors, the undertaker may establish version history by recording the correct data with the same pointer ID in the data field 222 and the representative data is generated correspondingly to describe that the stored representative data is needed to be modified, replaced or appended after the block 240 is confirmed, which is unalterable. In addition, any user may analyze the classified information about the whole of the marketing system by the pointer ID of the products, for example, the user may use a certain pointer ID to retrieve the latest representative data, or the user may retrieve the differences among the versions of the information of the object recorded in the database with the same pointer ID.

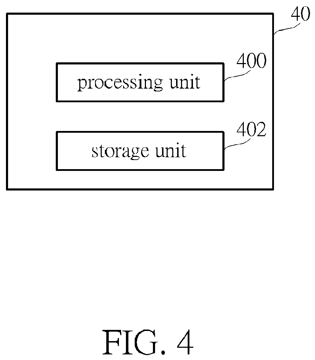

Note that, the system 20 and/or the integrity detecting process 30 may be implemented and/or executed by a computer system. For example, FIG. 4 is a schematic diagram of a computer system 40 according to an embodiment of the present invention. As shown in FIG. 4, the computer system 40 comprises a processing unit 400 and a storage unit 402. In an embodiment, each unit of the system 40 may be implemented by an application-specific integrated circuit (ASIC). In an embodiment, the processing unit 400 may be an application processor (AP) or a digital signal processor (DSP), wherein the processing unit 400 may be a central processing unit (CPU), a graphics processing unit (GPU) or a tensor processing unit (TPU) to implement the database and blockchain accessing mentioned above, and not limited thereto. The storage unit 402 may store the information of an object and a program code to instruct the processing unit 400 to perform the function of the integrity detecting process 30 of the present invention. The storage unit 402 may be a ROM (Read-only Memory), a RAM (Random-access Memory), a CD-ROM, an Optical Data Storage Device), a Non-volatile Memory such as an electrically erasable programmable read-only memory (EEPROM) or a flash memory, and not limited thereto.

Notably, the embodiments stated in the above are utilized for illustrating the concept of the present application. There is a plurality of data fields corresponding to the same block; for example, the information of the object may be recorded in the data fields 220 and 222 of the database 22, and the system 20 accordingly generates representative data to add to the two transactions in the same block 240 of the blockchain 24. Those skilled in the art may make modifications and alterations accordingly, and not limited herein to fit the practical scenario. For example, the system 20 may be applied to a DNA report storage system, a supply chain finance system, a real estate marketing system, and a traceability system with/without loT-based product monitoring. Therefore, as long as a database cooperating with a blockchain to store, back up, and recover the data thereof with data integrity guaranteed, the requirements of the present application are satisfied and within the scope of the present application.

In summary, the present invention provides a method for determining integrity of information of an object, applied to a database and a blockchain by establishing a relation between the database and the blockchain. By storing the data in the blockchain corresponding to the data stored in the database, the data integrity may be ensured, the version history may be easily retrieved, the data may be backed up and restored, and the integrity of the database may be verified.

## Claims

1. A method (30) for determining integrity of information of an object, **characterised by,** comprising:
generating a first data corresponding to the information of the object and generating a first representative data corresponding to the first data (302);
storing the first data to a database (22), and adding the first representative data into a first block of a blockchain (24) (304);
reading a second data from the database (22) in response to a command for retrieving the first data from the database (22) (306); and
using the first block to indicate whether the second data is identical to the first data (308).

2. The method (30) of claim 1, **characterised in that** generating the first representative data corresponding to the first data (302) comprises duplicating the first data as the first representative data or obtaining a compression result of the first data as the first representative data.

3. The method (30) of claim 1, **characterised in that** the database (22) comprises at least a data stored before the first data is generated, wherein generating the first representative data corresponding to the first data (302) comprises generating the first representative data according to the first data and the at least a stored data.

4. The method (30) of claim 1, **characterised in that** the blockchain (24) comprises at least a block inserted before the first block is inserted, and the at least a block comprises at least a stored representative data, wherein generating the first representative data corresponding to the first data (302) comprises generating the first representative data according to the first data and the at least a stored representative data.

5. The method (30) of claim 1, **characterised in that** generating the first representative data corresponding to the first data (302) comprises:
calculating a digest of the first data by a mapping table, a public algorithm or a public protected algorithm with a private key; and
adding the digest into the first representative data.

6. The method (30) of claim 5, **characterised in that** the public algorithm is a hash function, a message authentication code function, a key derivation functions, a keyed-hash message authentication code function or a symmetric-key cryptographic block cipher in an authenticated encryption mode.

7. The method (30) of claim 1, **characterised in that** using the first block to indicate whether the second data is identical to the first data (308) comprises:
retrieving the first representative data from the first block in the blockchain (24) (304);
calculating a second representative data corresponding to the second data (306); and
comparing the first representative data with the second representative data, to determine and indicate whether the second data is identical to the first data (308).

8. The method (30) of claim 1, **characterised in that** the database (22) comprises at least a data stored before the first data is generated, and the blockchain (24) comprises at least a block corresponding to the at least a stored data, wherein the method (30) further comprises:
obtaining the at least a stored data;
calculating a target representative data corresponding to the at least a stored data;
retrieving a basis representative data from a block of the at least a stored block in the blockchain (24); and
comparing the target representative data with the basis representative data, to verify integrity of the database (22).

9. The method (30) of claim 8, **characterised by** further comprising recovering the database (22) when verifying that the integrity of the database (22) is damaged.

10. A computer system (40), **characterised by,** comprising:
a processing unit (400); and
a storage unit (402), storing information of an object and a program code, wherein the program code instructs the processing unit (400) to execute the method (30) of claims 1-9.

## Amended claims

### Amended claims in accordance with Rule 137(2) EPC.

1. A method (30) for determining integrity of information of an object, **characterised by,** comprising:
generating a first data corresponding to the information of the object and generating a first representative data corresponding to the first data (302) according to the first data and at least one of a stored representative data on a block of a blockchain (24) (304) and a stored data in a database (22);
storing the first data to the database (22), and adding the first representative data into a first block of the blockchain (24) (304);
reading a second data from the database (22) in response to a command for retrieving the information of the object from the database (22) (306); and
determining integrity of the information of the object by using the first block to indicate whether the second data is identical to the first data (308).

2. The method (30) of claim 1, **characterised in that** generating the first representative data corresponding to the first data (302) comprises duplicating the first data as the first representative data or obtaining a compression result of the first data as the first representative data.

3. The method (30) of claim 1, **characterised in that** the database (22) comprises at least a data stored before the first data is generated, wherein generating the first representative data corresponding to the first data (302) comprises generating the first representative data according to the first data and the at least a stored data.

4. The method (30) of claim 1, **characterised in that** the blockchain (24) comprises at least a block inserted before the first block is inserted, and the at least a block comprises at least a stored representative data, wherein generating the first representative data corresponding to the first data (302) comprises generating the first representative data according to the first data and the at least a stored representative data.

5. The method (30) of claim 1, **characterised in that** generating the first representative data corresponding to the first data (302) comprises:
calculating a digest of the first data by a mapping table, a public algorithm or a public protected algorithm with a private key; and
adding the digest into the first representative data.

6. The method (30) of claim 5, **characterised in that** the public algorithm is a hash function, a message authentication code function, a key derivation functions, a keyed-hash message authentication code function or a symmetric-key cryptographic block cipher in an authenticated encryption mode.

7. The method (30) of claim 1, **characterised in that** using the first block to indicate whether the second data is identical to the first data (308) comprises:
retrieving the first representative data from the first block in the blockchain (24) (304);
calculating a second representative data corresponding to the second data (306); and
comparing the first representative data with the second representative data, to determine and indicate whether the second data is identical to the first data (308).

8. The method (30) of claim 1, **characterised in that** the database (22) comprises at least a data stored before the first data is generated, and the blockchain (24) comprises at least a block corresponding to the at least a stored data, wherein the method (30) further comprises:
obtaining the at least a stored data;
calculating a target representative data corresponding to the at least a stored data;
retrieving a basis representative data from a block of the at least a stored block in the blockchain (24); and
comparing the target representative data with the basis representative data, to verify integrity of the database (22).

9. The method (30) of claim 8, **characterised by** further comprising recovering the database (22) when verifying that the integrity of the database (22) is damaged.

10. A computer system (40), **characterised by,** comprising:
a processing unit (400); and
a storage unit (402), storing information of an object and a program code, wherein when the program code is loaded by the processing unit (400), the processing unit (400) executes the method (30) of claims 1-9.

11. The method (30) of claim 1-9, **characterized in that** the first representative data comprises a pointer ID, and the at least one of the stored representative data on the block of the blockchain and the stored data in the database are corresponding to the pointer ID.

12. The method (30) of claim 1-9, **characterized by** further comprising:
establishing a version history of the information of the object according to the representative data with the pointer ID.
